# EUROPÄISCHE PATENTSCHRIFT

(11) **EP 3 433 205 B1**
(45) Veröffentlichungstag und Bekanntmachung des Hinweises auf die Patenterteilung: **13.07.2022**
(21) Anmeldenummer: 17712950.9
(22) Anmeldetag: 21.03.2017
(51) Int. Cl.: B67C 3/24, B65G 47/86, B67C 7/00

(54) **VORRICHTUNG ZUM TRANSPORTIEREN VON BEHÄLTERN**
DEVICE FOR TRANSPORTING CONTAINERS
DISPOSITIF DE TRANSPORT DE CONTENANTS

(30) Priorität: 21.03.2016 DE 102016105224
(43) Veröffentlichungstag der Anmeldung: 30.01.2019
(73) Patentinhaber: Krones AG, 93073 Neutraubling (DE)
(72) Erfinder: LANDLER, Bruno, 93073 Neutraubling (DE); POESCHL, Stefan, 93073 Neutraubling (DE)
(74) Vertreter: Nordmeyer, Philipp Werner
(86) Internationale Anmeldenummer: PCT/EP2017/056629
(87) Internationale Veröffentlichungsnummer: WO 2017/162630

(56) Entgegenhaltungen:
- EP-A1- 2 407 417
- EP-A1- 2 460 746
- WO-A1-2006/077050
- DE-A1-102006 012 020
- JP-A- 2005 088 923
- US-A1- 2010 294 622

## Beschreibung

### Technisches Gebiet

Die vorliegende Erfindung betrifft eine Vorrichtung zum Transportieren von Behältern in einer Getränkeabfüllanlage sowie ein Behandlungsvorrichtung zum Behandeln von Behältern, bevorzugt zum Befüllen von Behältern in einer Getränkeabfüllanlage.

### Stand der Technik

Vorrichtungen zum Transportieren von Behältern in Getränkeabfüllanlagen sind bekannt. Es wird bei den Transportvorrichtungen unter anderem zwischen solchen Vorrichtungen, bei denen der Behälter in seinem Bodenbereich auf einem Transporttisch aufsteht, und solchen Vorrichtungen, bei denen der Behälter im Halsbereich gehalten wird und hängend transportiert wird, unterschieden. Letzteres wird auch als "neck-handling" bezeichnet.

Die am Halsbereich gehaltenen Behälter werden mittels Klammern geführt, wobei die Klammern beispielsweise unter einem Halsring des Behälters angreifen. Die Klammern sind zum Halten von Behältern einer bestimmten Behältergröße beziehungsweise von bestimmten Halsdimensionen ausgebildet. Sollen mit einer Transportvorrichtung Behälter einer anderen Behältergröße transportiert werden, so sind deren Klammern auszutauschen. Durch dieses Umrüsten entstehen Stillstandzeiten. Zudem bedingt das Umrüsten einen Eingriff von außen. Insbesondere bei Aseptikanlangen erfordert ein solcher Eingriff von außen eine nachfolgende Sterilisation, um die Betriebsbereitschaft wieder herzustellen.

Aus der EP 1841547 B1 ist eine Vorrichtung gemäß dem Oberbegriff des Anspruchs 1 bekannt, wobei bei einer Vorrichtung zum Halten von Behältern neben einem ersten Halter zum Halten von Behältern einer ersten Behältergröße, einen zweiten Halter zum Halten einer zweiten Behältergröße vorgesehen ist.

Die Halter weisen dabei bogenförmige Elemente auf, gegen welche ein Behälter in den Halter zu drücken ist. Insbesondere bei dünnwandigen Behältern kann es dadurch zu einer ungewollten Deformation des Behälters kommen.

In der JP 2005154066 A2 ist gezeigt, bei einem Transportstern Flaschen mit unterschiedlichen Durchmessern ohne Umrüsten der Greifklammern zu transportieren. Dafür sind die Greifelemente doppelseitig mit Aufnahmen für unterschiedliche Durchmesser ausgeführt und es wird entweder die kleinere oder die größere Flasche transportiert.

In der US 2010077703 A1 wird offenbart, einen von außen auf einen zu greifenden Behälter einwirkenden Greiferfinger durch eine Drehbewegung eines Hebels anzusteuern.

In der EP 1574460 A1 ist erwähnt, zum Umstellen von einem kleineren zu einem größeren Behälter die Greiferschließstellung eines Greifers zu verändern, so dass Behälter unterschiedlicher Behältergrößen ohne Austausch des Greifers aufgenommen werden können.

### Darstellung der Erfindung

Ausgehend von dem bekannten Stand der Technik ist es eine Aufgabe der vorliegenden Erfindung, eine verbesserte Vorrichtung zum Transportieren von Behältern in einer Getränkeabfüllanlage bereitzustellen.

Die Aufgabe wird durch eine Vorrichtung zum Transportieren von Behältern in einer Getränkeabfüllanlage mit den Merkmalen des Anspruchs 1 gelöst. Vorteilhafte Weiterbildungen ergeben sich aus den Unteransprüchen sowie der vorliegenden Beschreibung und den Figuren.

Entsprechend wird eine Vorrichtung zum Transportieren von Behältern in einer Getränkeabfüllanlage vorgeschlagen, welche zumindest eine zwischen einer offenen Schaltstellung und einer geschlossenen Schaltstellung verschwenkbare, in einer Schwenkebene angeordnete erste Klammer zum Halten eines Behälters einer ersten Behältergröße und eine zwischen einer offenen Schaltstellung und einer geschlossenen Schaltstellung verschwenkbare, in der Schwenkebene angeordnete zweite Klammer zum Halten eines Behälters einer zweiten Behältergröße aufweist. Erfindungsgemäß sind eine erste Steuernocke zum Steuern der Schaltstellung der ersten Klammer und eine zweite Steuernocke zum Steuern der Schaltstellung der zweiten Klammer vorgesehen, wobei die erste Steuernocke auf einer zur Schwenkebene parallelen ersten Steuerebene angeordnet ist und die zweite Steuernocke auf einer zur Schwenkebene parallelen zweiten Steuerebene angeordnet ist und die erste Steuerebene und die zweite Steuerebene voneinander beabstandet sind.

Dadurch, dass eine erste Steuernocke zum Steuern der Schaltstellung der ersten Klammer und eine zweite Steuernocke zum Steuern der Schaltstellung der zweiten Klammer vorgesehen sind, wobei die erste Steuernocke auf einer zur Schwenkebene parallelen ersten Steuerebene angeordnet ist und die zweite Steuernocke auf einer zur Schwenkebene parallelen zweiten Steuerebene angeordnet ist und die erste Steuerebene und die zweite Steuerebene voneinander beabstandet sind, können die Schaltstellungen der beiden Klammern unabhängig voneinander gesteuert werden. Ein synchrones Schalten beider Klammern beziehungsweise ein kontinuierliches Schalten der nicht genutzten Klammer kann somit vermieden werden. Insbesondere ist es auch möglich, beim Transportieren von Behältern der ersten Behältergröße die erste Klammer zu öffnen und zu schließen und gleichzeitig die zweite Klammer zum Halten der Behälter der zweiten Behältergröße stets geschlossen zu halten und umgekehrt. Hierdurch können die zwei Klammern näher aneinander angeordnet werden, ohne dass es zu Kollisionen zwischen der ersten Klammer und der zweiten Klammer kommt. Weiterhin kann die Vorrichtung sowie eine die Vorrichtung aufweisende Behandlungsvorrichtung mit geringerem Bauraum ausgeführt werden, wodurch der Materialaufwand zur Herstellung der Vorrichtung beziehungsweise der Behandlungsvorrichtung sowie der Energiebedarf während des Betriebs reduziert ist. Da die Behälter nicht gegen den Widerstand vorgespannter Klemmarme in die Klammer geschoben werden müssen, sondern durch Wechseln der Klammer zwischen offener Schaltstellung und geschlossener Schaltstellung die Behälter sanft übernommen und übergeben werden können, kann ferner ein ruckfreies Übernehmen und Übergeben der zu transportierenden Behälter erreicht werden. Zudem ist es hierdurch möglich, auch dünnwandige Behälter zu transportieren, ohne diese zu verformen.

In einer bevorzugten Ausführungsform ist mindestens ein Steuerelement zwischen einer ersten Steuerposition und einer zweiten Steuerposition verstellbar, wobei das Steuerelement in der ersten Steuerposition die erste Steuernocke verstellen kann und das Steuerelement in der zweiten Steuerposition die zweite Steuernocke verstellen kann. Hierdurch kann auf einfache Weise zwischen dem Steuern der ersten Klammer und dem Steuern der zweiten Klammer gewechselt werden, wobei lediglich ein Steuerelement vorzusehen ist, um je nach Steuerposition die erste oder die zweite Klammer zu steuern. Um einen robusten und einfachen Aufbau bereitzustellen, ist das Steuerelement bevorzugt als schaltbarer Bolzen ausgebildet.

Alternativ kann auch für jede Klammer ein eigenes Steuerelement vorgesehen sein. Bevorzugt ist dann mindestens eines der Steuerelemente verstellbar, so dass mindestens ein Steuerelement in die Steuerposition zum Verstellen der ihm zugeordneten Klammer bringbar ist und in eine Ruheposition bringbar ist, in welcher es nicht mit der ihm zugeordneten Klammer interagiert.

Ein besonders sicheres Schalten der zu steuernden Klammer kann erreicht werden, wenn die erste Steuerposition in der ersten Steuerebene liegt und die zweite Steuerposition in der zweiten Steuerebene liegt.

Wenn das Steuerelement zwischen der ersten Steuerposition und der zweiten Steuerposition verschwenkbar und/oder horizontal und/oder spiralförmig verschiebbar ist, kann ein besonders einfacher und robuster Aufbau der Vorrichtung beziehungsweise einer die Vorrichtung aufweisenden Behandlungsvorrichtung und ein geringer Wartungsaufwand erreicht werden.

In einer weiter bevorzugten Ausführungsform weisen die erste Klammer und/oder die zweite Klammer jeweils zwei schwenkbare Klemmarme auf, wobei an den Klemmarmen jeweils mindestens ein Magnetelement zum Anziehen oder Abstoßen der Klemmarme angeordnet ist. Durch das Vorsehen der Magnetelemente kann eine bestimmte Ruhelage der die zwei schwenkbaren Klemmarme aufweisenden Klammer gehalten werden. Bevorzugt ist dabei die Klammer in der offenen oder der geschlossenen Schaltstellung gehalten. Bevorzugt weist jeder der zwei schwenkbaren Klemmarme eine separate Schwenkachse auf, über welche sie geschwenkt werden können. Alternativ können die zwei schwenkbaren Klemmarme auch eine gemeinsame Schwenkachse aufweisen. Die offene Schaltstellung als Ruhelage der Klammer kann erreicht werden, wenn die Magnetelemente zwischen einem Haltebereich der Klemmarme, in welchem der zu transportierende Behälter durch die Klemmarme gehalten wird, und der mindestens einen Schwenkachse derart angeordnet sind, dass sie aufgrund ihrer gegenseitigen magnetischen Abstoßung die zwei Klemmarme auseinander drücken. Wenn die Magnetelemente derart angeordnet sind, dass sie sich gegenseitig anziehen, ergibt sich als Ruhelage der Klammer die geschlossene Schaltstellung. Alternativ können die Magnetelemente in Bezug auf die mindestens eine Schwenkachse auch gegenüber des Haltebereichs angeordnet sein. Dann ist die Wirkung der Polung der Magnetelemente zueinander auf die Klemmarme entsprechend umgekehrt.

Die oben gestellte Aufgabe wird weiterhin durch eine Behandlungsvorrichtung zum Behandeln von Behältern, bevorzugt zum Befüllen von Behältern in einer Getränkeabfüllanlage, mit den Merkmalen des Anspruchs 6 gelöst. Vorteilhafte Weiterbildungen der Behandlungsvorrichtung ergeben sich aus den Unteransprüchen sowie der vorliegenden Beschreibung und den Figuren.

Entsprechend wird eine Behandlungsvorrichtung zum Behandeln von Behältern, bevorzugt zum Befüllen von Behältern in einer Getränkeabfüllanlage, vorgeschlagen, welche zumindest ein Behandlungskarussell zum Behandeln, bevorzugt Befüllen, der Behälter, einen Einlaufstern zum Zuführen zu behandelnder Behälter zu dem Behandlungskarussell und einen Auslaufstern zum Abführen der behandelten Behälter aus dem Behandlungskarussell umfasst. Erfindungsgemäß ist an dem Einlaufstern und/oder dem Auslaufstern und/oder dem Behandlungskarussell mindestens eine Vorrichtung gemäß einer der vorstehenden Ausführungsformen angeordnet.

In einer bevorzugten Weiterbildung weist das Behandlungskarussell mindestens eine Varioklammer auf, welche zum Aufnehmen von Behältern verschiedener Behältergröße geeignet ist. Dadurch können sowohl Behälter der ersten Behältergröße als auch Behälter der zweiten Behältergröße an die Behandlungsvorrichtung übergeben werden. Ferner kann mindestens eine etwaige an dem Behandlungskarussell vorgesehene Behandlungseinheit zum Behandeln der Behälter, bevorzugt eine Fülleinheit zum Befüllen von Behältern, dabei in einer in Bezug zum Behandlungskarussell festen Position über der Varioklammer angeordnet sein und zum Befüllen sowohl eines in der Varioklammer gehaltenen Behältes der ersten Behältergröße sowie eines Behälters der zweiten Behältergröße verwendet werden.

Bevorzugt weist die Varioklammer zwei unsymmetrische Greifarme auf, so dass zumindest Behälter der ersten Behältergröße und Behälter der zweiten Behältergröße durch die Varioklammer aufgenommen werden können, ohne dass die beiden Greifarme kollidieren. Bevorzugt ist die Mittelachse eines Behälters der ersten Behältergröße im durch die Varioklammer gehaltenen Zustand konzentrisch zur Mittelachse eines Behälters der zweiten Behältergröße im durch die Varioklammer gehaltenen Zustand.

In einer bevorzugten Weiterbildung weist die Varioklammer einen kleinen Greifarm und einen großen Greifarm auf, wobei der große Greifarm bevorzugt in einer Bewegungsrichtung des Behandlungskarussells gesehen hinten angeordnet ist. Hierdurch können zum einen Behälter verschiedener Behältergrößen gegriffen werden, ohne dass der kleine Greifarm und der große Greifarm beim Greifen des Behälters der kleinen Behältergröße miteinander kollidieren. Zudem ist ein schonendes Übernehmen und Übergeben des zu behandelnden Behälters ermöglicht.

Alternativ kann auch an dem Behandlungskarussell mindestens eine Vorrichtung zum Transportieren von Behältern gemäß einer der vorstehenden Ausführungsformen angeordnet sein.

In einer weiter bevorzugten Ausführungsform ist zum Behandeln von Behältern der ersten Behältergröße die mindestens eine Varioklammer des Behandlungskarussells mit der mindestens einen ersten Klammer des Einlaufstern und/oder des Auslaufsterns synchronisierbar. Dadurch kann ein von der ersten Klammer des Einlaufsterns an das Behandlungskarussell zu übergebender Behälter der ersten Behältergröße korrekt an die Varioklammer übergeben werden beziehungsweise ein von der Varioklammer gehaltener, behandelter Behälter der ersten Behältergröße von der ersten Klammer des Auslaufsterns korrekt übernommen werden.

In einer bevorzugten Weiterbildung ist zum Behandeln von Behältern der zweiten Behältergröße die mindestens eine Varioklammer des Behandlungskarussells mit der mindestens einen zweiten Klammer des Einlaufsterns und/oder des Auslaufsterns synchronisierbar. Dadurch kann ein von der zweiten Klammer des Einlaufsterns an das Behandlungskarussell zu übergebender Behälter der zweiten Behältergröße korrekt an die Varioklammer übergeben werden beziehungsweise ein von der Varioklammer gehaltener, behandelter Behälter der zweiten Behältergröße von der zweiten Klammer des Auslaufsterns korrekt übernommen werden.

### Kurze Beschreibung der Figuren

Bevorzugte weitere Ausführungsformen der Erfindung werden durch die nachfolgende Beschreibung der Figuren näher erläutert. Dabei zeigen:
- Figur 1: schematisch eine Draufsicht auf eine Behandlungsvorrichtung zum Behandeln von Behältern mit einem Behandlungskarussell, an dem eine Vielzahl von Vorrichtungen zum Transportieren von Behältern vorgesehen ist;
- Figur 2: schematisch eine perspektivische Seitenansicht einer Vorrichtung zum Transportieren von Behältern aus Figur 1;
- Figur 3: schematisch eine Unteransicht der Vorrichtung zum Transportieren von Behältern aus Figur 2;
- Figur 4: schematisch eine weitere Unteransicht der Vorrichtung zum Transportieren von Behältern aus Figur 2; und
- Figur 5: schematisch eine perspektivische Seitenansicht einer an dem Behandlungskarussell aus Figur 1 angeordneten Varioklammer zum Greifen verschiedener Behältergrößen.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente in den unterschiedlichen Figuren mit identischen Bezugszeichen versehen, und auf eine wiederholte Beschreibung dieser Elemente wird teilweise verzichtet, um Redundanzen zu vermeiden.

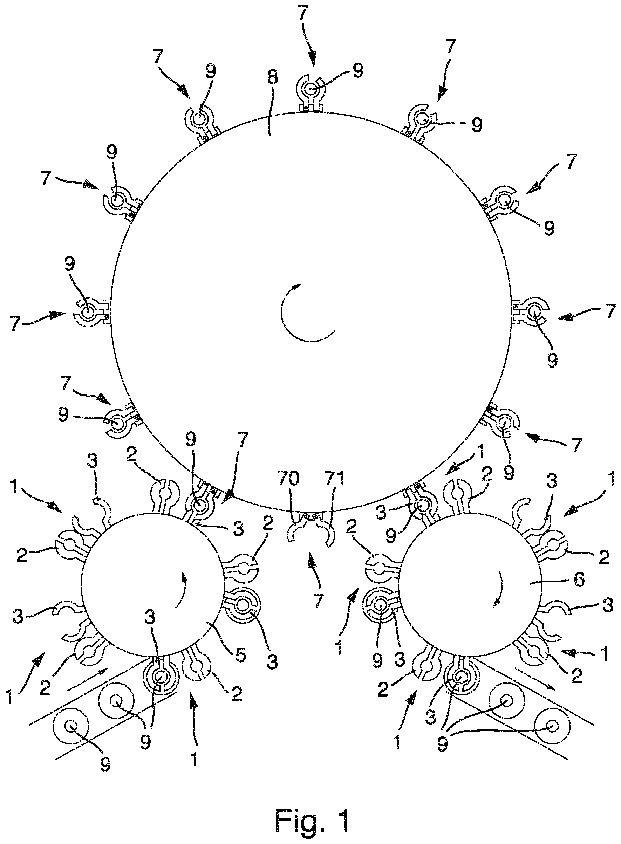

Figur 1 zeigt schematisch eine Draufsicht auf eine Behandlungsvorrichtung 100 zum Behandeln von zu behandelnden Behältern 9 mit einem Behandlungskarussell 8 in einer Getränkeabfüllanlage, wobei das Behandlungskarussell 8 beispielsweise als Füllerkarussell in einer Getränkeabfüllanlage ausgebildet sein kann. Weiterhin sind ein Einlaufstern 5 und ein Auslaufstern 6 vorgesehen, mit denen die zu behandelnden Behälter 9 dem Behandlungskarussell 8 zugeführt und von diesem zur weiteren Verarbeitung auch wieder abgeführt werden.

An Einlaufstern 5 und Auslaufstern 6 sind eine Vielzahl von Vorrichtungen 1 zum Transportieren von Behältern 9 vorgesehen. Die Vorrichtungen 1 zum Transportieren von Behältern weisen jeweils eine zwischen einer offenen Schaltstellung und einer geschlossenen Schaltstellung in einer Schwenkebene verschwenkbare erste Klammer 2 zum Halten eines Behälters einer ersten Behältergröße und eine neben der ersten Klammer 2 angeordnete, zwischen einer offenen Schaltstellung und einer geschlossenen Schaltstellung in der Schwenkebene verschwenkbare zweite Klammer 3 zum Halten eines Behälters 9 einer zweiten Behältergröße auf.

Die in Figur 1 gezeigte Behandlungsvorrichtung 100 ist zunächst zum Behandeln von Behältern 9 der zweiten Behältergröße eingerichtet. Hierzu sind die zweiten Klammern 3 des Einlaufsterns 5 sowie des Auslaufsterns 6 mit an dem Behandlungskarussell 8 angeordneten, zum Aufnehmen von Behältern 9 verschiedener Behältergröße geeigneten Varioklammern 7 synchronisiert. Die Varioklammern 7 weisen zwei unsymmetrische Greifarme 70, 71 auf, so dass sowohl Behälter 9 der ersten Behältergröße, als auch Behälter 9 der zweiten Behältergröße sicher durch die Varioklammer 7 aufgenommen werden können, ohne dass die beiden Greifarme 70, 71 kollidieren. Dabei ist die Mittelachse eines Behälters 9 der ersten Behältergröße im durch die Varioklammer 7 gehaltenen Zustand konzentrisch zur Mittelachse eines Behälters 9 der zweiten Behältergröße im durch die Varioklammer 7 gehaltenen Zustand. Solche Varioklammern 7 sind prinzipiell bekannt.

Zu behandelnde Behälter 9 der zweiten Behältergröße werden dem Einlaufstern 5 zugeführt. Dabei greift eine der zweiten Klammern 3 des Einlaufsterns 5 einen zu behandelnden Behälter 9, indem sie von einer offenen Schaltstellung in eine geschlossene Schaltstellung wechselt. Der durch die zweite Klammer 3 gehaltene Behälter 9 wird daraufhin dem Behandlungskarussell 8 zugeführt. Hier übergibt die zweite Klammer 3 den gehaltenen Behälter 9 an eine mit der zweiten Klammer 3 synchronisierten Varioklammer 7. Die zweite Klammer schwenkt zum Übergeben des Behälters 9 von der geschlossenen Schaltstellung in die offene Schaltstellung, so dass der Behälter 9 dann durch die Varioklammer 7 gehalten wird und durch eine nicht gezeigte Behandlungseinheit des Behandlungskarussells, bevorzugt eine Fülleinheit zum Befüllen eines Behälters 9, behandelt werden kann. Danach übernimmt eine mit der Varioklammer 7 synchronisierte zweite Klammer 3 des Auslaufsterns 6 den dann behandelten Behälter 9 zum Ausleiten des behandelten Behälters 9.

Da die Behandlungsvorrichtung 100 aus Figur 1 zum Behandeln von Behältern 9 der zweiten Behältergröße eingerichtet ist, befinden sich die ersten Klammern 2 der Vorrichtungen 1 des Einlaufsterns 5 sowie des Auslaufsterns 6, welche zum Halten von Behältern der ersten Behältergröße vorgesehen sind, permanent in der geschlossenen Schaltstellung.

Ist hingegen vorgesehen, dass Behälter der ersten Behältergröße verarbeitet werden sollen, werden entsprechend die ersten Klammern 2 der Vorrichtungen 1 des Einlaufsterns 5 und des Auslaufsterns 6 aktiviert und die zweiten Klammern 3 verbleiben permanent in der geschlossenen Schaltstellung. Um eine problemlose Übergabe der Behälter von dem Einlaufstern 5 an das Behandlungskarussell 8, sowie eine problemlose Übergabe der Behälter von dem Behandlungskarussell 8 an den Auslaufstern 6 zu ermöglichen, werden dann die ersten Klammern 2 des Einlaufsterns 5 und des Auslaufsterns 6 mit den Varioklammern 7 des Behandlungskarussells synchronisiert. Dazu wird beim Umrüsten von der Verwendung der ersten Klammern 2 auf die zweiten Klammern 3 der Einlaufstern 5 und der Auslaufstern 6 um einen entsprechenden Winkel rotiert, so dass die Synchronisation wieder hergestellt ist.

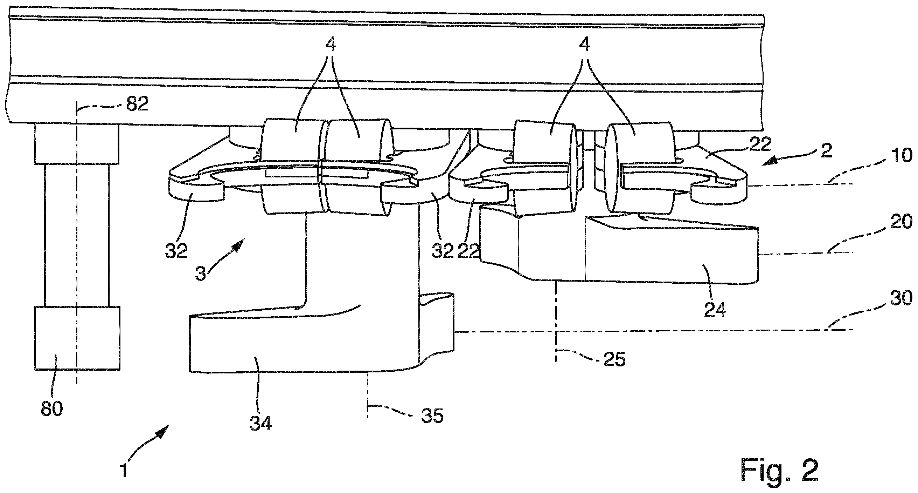

Figur 2 ist eine schematische perspektivische Seitenansicht einer Vorrichtung 1 zum Transportieren von Behältern 9 aus Figur 1 zu entnehmen. Die erste Klammer 2 und die zweite Klammer 3 sind auf der Schwenkebene 10 schwenkbar angeordnet. Unterhalb der Schwenkebene 10 ist eine erste Steuernocke 24 zum Steuern der Schaltstellung der ersten Klammer 2 auf einer zur Schwenkebene 10 parallelen ersten Steuerebene 20 angeordnet. Unterhalb der ersten Steuerebene 20 ist eine zweite Steuernocke 34 zum Steuern der Schaltstellung der zweiten Klammer 3 auf einer zur Schwenkebene 10 parallelen zweiten Steuerebene 30 angeordnet. Die erste Steuernocke 24 kann um eine erste Steuerachse 25 herum zwischen einer ersten Steuerstellung und einer zweiten Steuerstellung verschwenkt werden. Die zweite Steuernocke 34 kann um eine zweite Steuerachse 35 herum ebenfalls zwischen einer ersten Steuerstellung und einer zweiten Steuerstellung verschwenkt werden. Der Abstand zwischen der ersten Steuerebene 20 und der zweiten Steuerebene 30 ist so gewählt, dass die erste Steuernocke 24 und die zweite Steuernocke 34 bei den jeweiligen Verschwenkbewegungen nicht miteinander kollidieren.

Bei der in Figur 2 gezeigten Vorrichtung 1 befindet die sich erste Steuernocke 24 in der ersten Schaltstellung, wodurch sich die erste Klammer 2 in der geöffneten Schaltstellung befindet. Dabei werden die zwei Klemmarme 22 der ersten Klammer 2 durch gleichpolig an den Klemmarmen 22 angeordnete Magnetelemente 4 aufgrund der daraus resultierenden magnetischen Abstoßung auseinander gedrückt, so dass sich die Klammer immer in einer geöffneten Position befindet, außer sie wird aktiv durch die Steuernocke 24 geschlossen.

Die zweite Steuernocke 34 befindet sich in der zweiten Steuerstellung, wodurch die zweite Klammer 3 auch entgegen der Magnetkraft der Magnetelemente 4 in der geschlossenen Schaltstellung gehalten wird.

Alternativ können die Magnetelemente 4 an den Klemmarmen 22 auch gegensinnig angeordnet sein, so dass sie sich anziehen und sich die Klemmarme 22 stets in einer geschlossenen Stellung befinden, außer dass sie durch die Einwirkung der Steuernocken aktiv auseinander gedrückt werden.

Zum Verstellen der Steuernocken 24, 34 ist ein zwischen einer ersten Steuerposition und einer zweiten Steuerposition verstellbares Steuerelement 80 vorgesehen, wobei das Steuerelement 80 in der ersten Steuerposition die erste Steuernocke 24 verstellen kann und das Steuerelement 80 in der zweiten Steuerposition die zweite Steuernocke 34 verstellen kann. Die erste Steuerposition liegt dabei in der ersten Steuerebene 20 und die zweite Steuerposition in der zweiten Steuerebene 30. Da die Behandlungsvorrichtung 8 zum Behandeln von Behältern 9 der zweiten Behältergröße eingerichtet ist, befindet sich das Steuerelement 80 entsprechend in dem in der Figur 2 gezeigten Zustand in der zweiten Steuerposition. Ein Verstellen der ersten Steuernocke 24 durch das Steuerelement 80 findet somit nicht statt, so dass die erste Klammer 2 nicht betätigt wird, sondern in der durch die Magnetelemente 4 vorgegebenen Schaltstellung verharrt.

Das Steuerelement 80 ist in der in Figur 2 gezeigten Ausführungsform als Steuerhaken ausgebildet, welcher entlang einer an der Behandlungsvorrichtung 8 in einer festen Position angeordneten Verschiebeachse 82 senkrecht zu den Steuerebenen 20, 30 verschoben werden kann, um die erste Steuerposition oder die zweite Steuerposition einzunehmen.

Alternativ kann das Steuerelement 80 auch eine oder mehrere Führungsbahnen aufweisen, entlang welchen die erste und zweite Steuernocke 24, 34 geführt werden beziehungsweise über welche die Positionen der ersten und zweiten Steuernocke 24, 34 vorgegeben werden.

In einer weiteren alternativen Variante kann das Steuerelement 80 als Exzenterhebel beziehungsweise als Exzenterscheibe ausgebildet sein, wobei das Steuerelement dann um eine weitere Schwenkachse herum schwenkbar angeordnet ist. Die weitere Schwenkachse ist dabei bevorzugt in einer zu den Steuerebenen 20, 30 parallelen Ebene angeordnet. So kann das Steuerelement lediglich eine Nocke aufweisen, welche zwischen der ersten und der zweiten Steuerposition verschwenkt werden kann. Alternativ kann das Steuerelement auch um eine schräg oder senkrecht zu den Steuerebenen 20, 30 angeordnete Schwenkachse herum verschwenkbar sein, wobei das Steuerelement dann bevorzugt zwei Nocken aufweist. Die erste Nocke ist dabei in der ersten Steuerebene 20 angeordnet und die zweite Nocke ist in der zweiten Steuerebene 30 entgegengesetzt zur ersten Nocke angeordnet. Dadurch wird, wenn die erste Nocke in die erste Steuerposition geschwenkt wird, die zweite Nocke aus der zweiten Steuerposition heraus geschwenkt. Entsprechend wird, wenn die erste Nocke aus der ersten Steuerposition heraus geschwenkt wird, die zweite Nocke in die zweite Steuerposition geschwenkt.

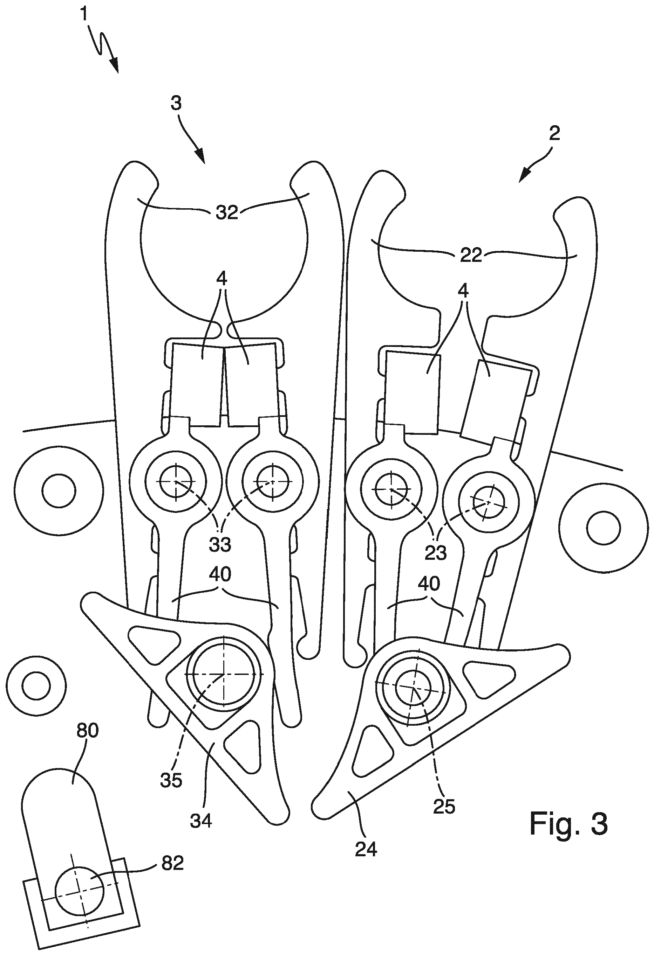

Figur 3 zeigt schematisch eine Unteransicht der Vorrichtung 1 zum Transportieren von Behältern aus Figur 2. Die Klemmarme 22, 32 der zwei Klammern 2, 3 sind jeweils über eigene Schwenkachsen 23, 33 in der Schwenkebene 10 schwenkbar. Da sich die erste Steuernocke 24 in der ersten Steuerstellung befindet, wird die erste Klammer 2 aufgrund der magnetischen Abstoßung der an den zwei Schwenkarmen 22 angeordneten Magnetelemente 4 in der geöffneten Schaltstellung gehalten. Die zweite Klammer 3 ist in der geschlossenen Schaltstellung gehalten, da sich die zweite Steuernocke 34 in der zweiten Steuerstellung befindet.

Die Verschiebeachse 82 des Steuerelements 80 ist in Richtung der Klammern 2, 3 gesehen hinter beziehungsweise innerhalb dieser angeordnet, so dass bei einem Vorbeibewegen der ersten Steuernocke 24 und der zweiten Steuernocke 34 an dem Steuerelement 80 diese nicht mit der Verschiebeachse 82 in Berührung kommen. Die Positionsänderung der ersten Steuernocke 24 beziehungsweise der zweiten Steuernocke 34 erfolgt somit einzig durch das Steuerelement 80. Da sich das Steuerelement 80, wie aus Figur 2 ersichtlich, in der zweiten Steuerposition und somit in der zweiten Steuerebene 30 befindet, wird bei einem Vorbeibewegen der der ersten Steuernocke 24 und der zweiten Steuernocke 34 entsprechend nur die zweite Steuernocke 34 verstellt. Die erste Steuernocke 24 kommt nicht mit dem Steuerelement 80 in Kontakt und erfährt folglich keine Verstellung. Wenn sich das Steuerelement 80 in der ersten Steuerposition befindet, wird entsprechend nur die erste Steuernocke 24 verstellt.

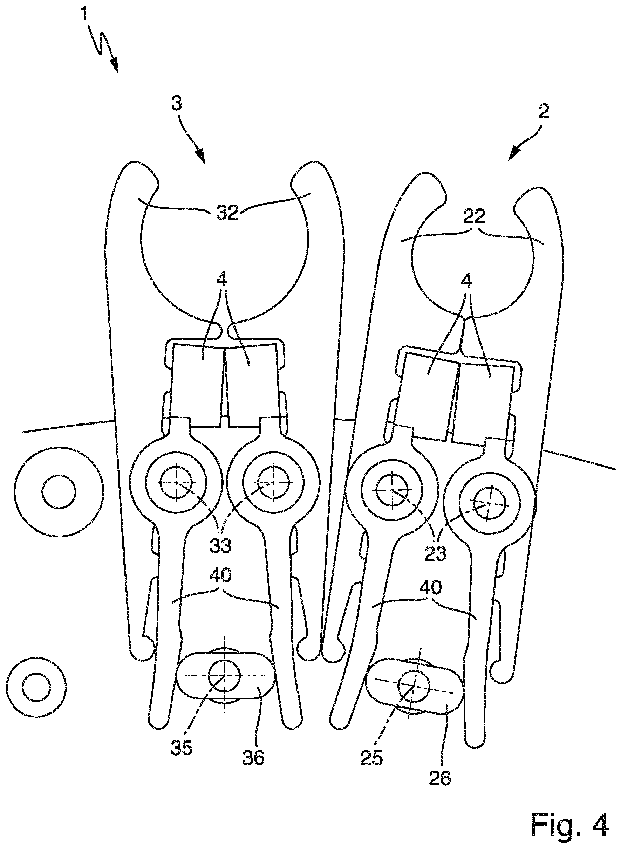

In Figur 4 ist schematisch eine weitere Unteransicht der Vorrichtung 1 zum Transportieren von Behältern aus den Figuren 2 und 3 gezeigt, welche im Wesentlichen der Ansicht aus Figur 3 entspricht, wobei die Steuernocken 24, 34 nicht dargestellt sind. Die erste und die zweite Klammer 2, 3 befinden sich hier jeweils in der geschlossenen Schaltstellung. Durch Verstellen der hier nicht gezeigten ersten Steuernocke 24 in die zweite Steuerstellung wird eine in der Schwenkebene 10 angeordnete erste Steuerwippe 26 um die Steuerachse 25 herum in die in Figur 4 dargestellte Position gedreht, so dass die Klemmarme 22 der ersten Klammer 2 über an den Klemmarmen 22 angeordneten Magnetelementträgern 40 um die Schwenkachsen 23 aufeinander zu geschwenkt werden. Dadurch wird die erste Klammer 2 wie dargestellt in der geschlossenen Schaltstellung gehalten. Bei einem Verdrehen der ersten Steuernocke 34 in die erste Steuerstellung wird die erste Steuerwippe 26 entsprechend gedreht, in der dargestellten Ausführungsform um 90° gedreht, so dass die Schwenkarme 22 durch die magnetische Abstoßung der zwei Magnetelemente 4 um die Schwenkachsen 23 voneinander weg gedrückt werden und die erste Klammer 2 somit in die geöffnete Schaltstellung geschwenkt wird. Entsprechend wird auch die zweite Klammer 3 über eine zweite Schaltwippe 36 in der geschlossenen Schaltstellung gehalten.

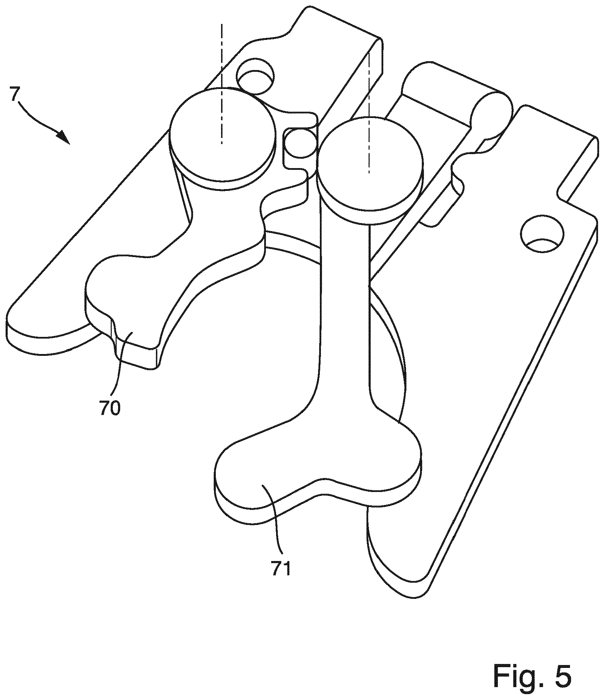

Figur 5 zeigt schematisch eine perspektivische Seitenansicht einer an dem Behandlungskarussell 8 aus Figur 1 angeordneten Varioklammer 7 zum Greifen von Behältern 9 verschiedener Behältergrößen. Die Varioklammer 7 weist ein unsymmetrisches Greifarmpaar 70, 71 mit einem schwenkbaren kleinen Greifarm 70 und einem schwenkbaren großen Greifarm 71 auf. Hierdurch können Behälter verschiedener Behältergrößen gegriffen werden, ohne dass der kleine Greifarm 70 und der große Greifarm 71 beim Greifen des Behälters der kleinen Behältergröße miteinander kollidieren. Der große Greifarm 71 ist dabei in Bewegungsrichtung des Behandlungskarussells 8 gesehen hinten angeordnet. Dadurch kann ein schonendes Übernehmen und Übergeben des zu behandelnden Behälters bereitgestellt werden.

In einer Alternative können an dem Behandlungskarussell 8 ebenfalls zwei Klammern 2, 3 angeordnet sein, so wie es bezüglich des Einlaufsterns 5 und des Auslaufsterns 6 gezeigt ist. Hier an dem Behandlungskarussell 8 ist dann bevorzugt eine Möglichkeit zur Synchronisierung des jeweiligen Behandlungsorgans, beispielsweise des Füllorgans, mit den jeweiligen durch die Klammern 2, 3 vorgegebenen Positionen vorgesehen. Beispielsweise kann ein Transportelementträger relativ zu einem Behandlungsorganträger rotiert werden.

### Bezugszeichen liste

- 1: Vorrichtung
- 10: Schwenkebene

- 2: erste Klammer
- 20: erste Steuerebene
- 22: Klemmarm
- 23: Schwenkachse
- 24: erste Steuernocke
- 25: erste Steuerachse
- 26: erste Steuerwippe

- 3: zweite Klammer
- 30: zweite Steuerebene
- 32: Klemmarm
- 33: Schwenkachse
- 34: zweite Steuernocke
- 35: zweite Steuerachse
- 36: zweite Steuerwippe

- 4: Magnetelement
- 40: Magnetelementträger

- 5: Einlaufstern
- 6: Auslaufstern

- 7: Varioklammer
- 70: kleiner Greifarm
- 71: großer Greifarm
- 8: Behandlungskarussell
- 80: Steuerelement
- 82: Verschiebeachse
- 9: Behälter
- 100: Behandlungsvorrichtung

## Patentansprüche

1. Vorrichtung (1) zum Transportieren von Behältern (9) in einer Getränkeabfüllanlage, welche zumindest eine zwischen einer offenen Schaltstellung und einer geschlossenen Schaltstellung verschwenkbare, in einer Schwenkebene (10) angeordnete erste Klammer (2) zum Halten eines Behälters (9) einer ersten Behältergröße, und eine zwischen einer offenen Schaltstellung und einer geschlossenen Schaltstellung verschwenkbare, in der Schwenkebene (10) angeordnete zweite Klammer (3) zum Halten eines Behälters (9) einer zweiten Behältergröße aufweist,
**dadurch gekennzeichnet, dass**
eine erste Steuernocke (24) zum Steuern der Schaltstellung der ersten Klammer (2) und eine zweite Steuernocke (34) zum Steuern der Schaltstellung der zweiten Klammer (3) vorgesehen sind, wobei die erste Steuernocke (24) auf einer zur Schwenkebene (10) parallelen ersten Steuerebene (20) angeordnet ist und die zweite Steuernocke (34) auf einer zur Schwenkebene (10) parallelen zweiten Steuerebene (30) angeordnet ist und die erste Steuerebene (20) und die zweite Steuerebene (30) voneinander beabstandet sind.

2. Vorrichtung (1) gemäß Anspruch 1, **dadurch gekennzeichnet, dass** mindestens ein Steuerelement (80) zwischen einer ersten Steuerposition und einer zweiten Steuerposition verstellbar ist, wobei das Steuerelement (80) in der ersten Steuerposition die erste Steuernocke (24) verstellen kann und das Steuerelement (80) in der zweiten Steuerposition (34) die zweite Steuernocke verstellen kann.

3. Vorrichtung (1) gemäß Anspruch **dadurch gekennzeichnet, dass** die erste Steuerposition in der ersten Steuerebene (20) liegt und die zweite Steuerposition in der zweiten Steuerebene (30) liegt.

4. Vorrichtung (1) gemäß Anspruch 2 oder 3, **dadurch gekennzeichnet, dass** das Steuerelement (80) zwischen der ersten Steuerposition und der zweiten Steuerposition verschwenkbar und/oder horizontal und/oder spiralförmig verschiebbar ist.

5. Vorrichtung (1) gemäß einem der vorstehenden Ansprüche, **dadurch gekennzeichnet, dass** die erste Klammer (2) und/oder die zweite Klammer (3) jeweils zwei schwenkbare Klemmarme (22, 32) aufweisen, wobei an den Klemmarmen (22, 32) jeweils mindestens ein Magnetelement (4) zum Anziehen oder Abstoßen der Klemmarme (22, 32) angeordnet ist.

6. Behandlungsvorrichtung (100) zum Behandeln von Behältern (9), bevorzugt zum Befüllen von Behältern (9) in einer Getränkeabfüllanlage, umfassend zumindest ein Behandlungskarussell (8) zum Behandeln der Behälter (9), einen Einlaufstern (5) zum Zuführen zu behandelnder Behälter (9) zu dem Behandlungskarussell (8) und einen Auslaufstern (6) zum Abführen der behandelten Behälter (9) aus dem Behandlungskarussell (8),
**dadurch gekennzeichnet, dass**
an dem Einlaufstern (5) und/oder dem Auslaufstern (6) und/oder dem Behandlungskarussell (8) mindestens eine Vorrichtung (1) gemäß einem der vorstehenden Ansprüche angeordnet ist.

7. Behandlungsvorrichtung (100) gemäß Anspruch 6, **dadurch gekennzeichnet, dass** das Behandlungskarussell (8) mindestens eine Varioklammer (7) aufweist, welche zum Aufnehmen von Behältern (9) verschiedener Behältergröße geeignet ist.

8. Behandlungsvorrichtung (100) gemäß Anspruch 7, **dadurch gekennzeichnet, dass** zum Behandeln von Behältern (9) der ersten Behältergröße die mindestens eine Varioklammer (7) des Behandlungskarussells (8) mit der mindestens einen ersten Klammer (2) des Einlaufsterns (5) und/oder des Auslaufsterns (6) synchronisierbar ist.

9. Behandlungsvorrichtung (100) gemäß Anspruch 7 oder 8, **dadurch gekennzeichnet, dass** zum Behandeln von Behältern (9) der zweiten Behältergröße die mindestens eine Varioklammer (7) des Behandlungskarussells (8) mit der mindestens einen zweiten Klammer (3) des Einlaufsterns (5) und/oder des Auslaufsterns (6) synchronisierbar ist.

## Claims

1. Device (1) for transporting containers (9) in a beverage filling plant, which device has at least one first clamp (2), which can be pivoted between an open switching position and a closed switching position and is arranged in a pivoting plane (10), for holding a container (9) of a first container size and one second clamp (3), which can be pivoted between an open switching position and a closed switching position and is arranged in the pivoting plane (10), for holding a container (9) of a second container size,
**characterised in that**
a first control cam (24) is provided for controlling the switching position of the first clamp (2) and a second control cam (34) is provided for controlling the switching position of the second clamp (3), wherein the first control cam (24) is arranged in a first control plane (20) parallel to the pivoting plane (10) and the second control cam (34) is arranged in a second control plane (30) parallel to the pivoting plane (10) and the first control plane (20) and the second control plane (30) are spaced apart from each other.

2. Device (1) according to claim 1, **characterised in that** at least one control element (80) is displaceable between a first control position and a second control position, wherein, in the first control position, the control element (80) can displace the first control cam (24) and, in the second control position (34), the control element (80) can displace the second control cam.

3. Device (1) according to claim 2, **characterised in that** the first control position is in the first control plane (20) and the second control position is in the second control plane (30).

4. Device (1) according to claim 2 or 3, **characterised in that** the control element (80) can be pivoted between the first control position and the second control position and/or can be displaced horizontally and/or in a spiral therebetween.

5. Device (1) according to any of the preceding claims, **characterised in that** the first clamp (2) and/or the second clamp (3) each have two pivotable clamping arms (22, 32), wherein at least one magnetic element (4) is arranged on each of the clamping arms (22, 32) in order to attract or repel the clamping arms (22, 32).

6. Treatment device (100) for treating containers (9), preferably for filling containers (9) in a beverage filling plant, comprising at least one treatment carousel (8) for treating the containers (9), an infeed starwheel (5) for feeding containers (9) to be treated to the treatment carousel (8) and a discharge starwheel (6) for conveying the treated containers (9) out of the treatment carousel (8),
**characterised in that**
at least one device (1) according to any of the preceding claims is arranged on the infeed starwheel (5) and/or the discharge starwheel (6) and/or the treatment carousel (8).

7. Treatment device (100) according to claim 6, **characterised in that** the treatment carousel (8) has at least one variable clamp (7) which is suitable for accommodating containers (9) of different container sizes.

8. Treatment device (100) according to claim 7, **characterised in that** in order to treat containers (9) of the first container size, the at least one variable clamp (7) of the treatment carousel (8) can be synchronised with the at least one first clamp (2) of the infeed starwheel (5) and/or the discharge starwheel (6).

9. Treatment device (100) according to claim 7 or 8, **characterised in that** in order to treat containers (9) of the second container size, the at least one variable clamp (7) of the treatment carousel (8) can be synchronised with the at least one second clamp (3) of the infeed starwheel (5) and/or the discharge starwheel (6).

## Revendications

1. Dispositif (1) permettant de transporter des récipients (9) dans une installation de remplissage de boisson, qui présente au moins une première pince (2) agencée dans un plan de pivotement (10) et pouvant pivoter entre une position de commutation ouverte et une position de commutation fermée, pour maintenir un récipient (9) d'une première taille de récipient, et une seconde pince (3) agencée dans le plan de pivotement (10) et pouvant pivoter entre une position de commutation ouverte et une position de commutation fermée pour maintenir un récipient (9) d'une seconde taille de récipient,
**caractérisé en ce que**
une première came de commande (24) est prévue pour commander la position de commutation de la première pince (2) et une seconde came de commande (34) est prévue pour commander la position de commutation de la seconde pince (3), dans lequel la première came de commande (24) est agencée sur un premier plan de commande (20) parallèle au plan de pivotement (10) et la seconde came de commande (34) est agencée sur un second plan de commande (30) parallèle au plan de pivotement (10) et le premier plan de commande (20) et le second plan de commande (30) sont distants l'un de l'autre.

2. Dispositif (1) selon la revendication 1, **caractérisé en ce que** au moins un élément de commande (80) peut être réglé entre une première position de commande et une seconde position de commande, dans lequel l'élément de commande (80) peut régler la première came de commande (24) dans la première position de commande et l'élément de commande (80) peut régler la seconde came de commande dans la seconde position de commande (34).

3. Dispositif (1) selon la revendication 2, **caractérisé en ce que** la première position de commande se situe dans le premier plan de commande (20) et la seconde position de commande se situe dans le second plan de commande (30).

4. Dispositif (1) selon la revendication 2 ou 3, **caractérisé en ce que** l'élément de commande (80) peut être pivoté et/ou déplacé horizontalement et/ou en spirale entre la première position de commande et la seconde position de commande.

5. Dispositif (1) selon l'une des revendications précédentes, **caractérisé en ce que** la première pince (2) et/ou la seconde pince (3) présentent chacune deux bras de serrage pivotants (22, 32), dans lequel au moins un élément magnétique (4) est agencé respectivement sur les bras de serrage (22, 32) pour attirer ou repousser les bras de serrage (22, 32).

6. Dispositif de traitement (100) pour traiter des récipients (9), de préférence pour remplir des récipients (9) dans une installation de remplissage de boisson, comprenant au moins un carrousel de traitement (8) pour traiter les récipients (9), une étoile d'entrée (5) pour amener les récipients à traiter (9) vers le carrousel de traitement (8) et une étoile de sortie (6) pour évacuer les récipients traités (9) du carrousel de traitement (8),
**caractérisé en ce que**
au moins un dispositif (1) selon l'une des revendications précédentes est agencé sur l'étoile d'entrée (5) et/ou l'étoile de sortie (6) et/ou le carrousel de traitement (8).

7. Dispositif de traitement (100) selon la revendication 6, **caractérisé en ce que** le carrousel de traitement (8) présente au moins une pince variable (7), qui est adaptée pour recevoir des récipients (9) de différentes tailles de récipient.

8. Dispositif de traitement (100) selon la revendication 7, **caractérisé en ce que** pour traiter des récipients (9) de la première taille de récipient, la au moins une pince variable (7) du carrousel de traitement (8) peut être synchronisée à la au moins une première pince (2) de l'étoile d'entrée (5) et/ou de l'étoile de sortie (6).

9. Dispositif de traitement (100) selon la revendication 7 ou 8, **caractérisé en ce que** pour traiter des récipients (9) de la seconde taille de récipient, la au moins une pince variable (7) du carrousel de traitement (8) peut être synchronisée avec la au moins une seconde pince (3) de l'étoile d'entrée (5) et/ou de l'étoile de sortie (6).
